# EUROPÄISCHE PATENTSCHRIFT

(11) **EP 0 596 308 B1**
(45) Veröffentlichungstag und Bekanntmachung des Hinweises auf die Patenterteilung: **03.01.1996**
(21) Anmeldenummer: 93116768.8
(22) Anmeldetag: 18.10.1993
(51) Int. Cl.: F16B 45/02

(54) **Karabinerhaken**
Karabiner hook
Mousqueton

(30) Priorität: 02.11.1992 AT 2157/92
(43) Veröffentlichungstag der Anmeldung: 11.05.1994
(73) Patentinhaber: Wurzer, Franz, A-6166 Fulpmes, Tirol (AT)
(72) Erfinder: Wurzer, Franz, A-6166 Fulpmes, Tirol (AT)
(74) Vertreter: Hefel, Herbert, Dipl.-Ing.

(56) Entgegenhaltungen:
- WO-A-87/04142
- FR-A- 403 448
- FR-A- 414 795
- FR-A- 2 485 658

## Beschreibung

Die Erfindung bezieht sich auf einen Karabinerhaken mit einem im wesentlichen C-förmigen, lastaufnehmenden Hakenteil und einem am einen Ende des Hakenteiles in dessen Ebene schwenkbar gelagerten, durch Federkraft in Schließstellung gehaltenen Schließteil, der in der Schließstellung am anderen freien Ende des Hakenteiles an dessen Innenseite anliegt und der dem freien Ende des Hakenteiles benachbarte Abschnitt an seiner Innenseite einen um eine rechtwinkelig zur Ebene des Hakenteiles stehende Achse schwenkbaren, dem Verlauf dieses Abschnittes im wesentlichen folgenden Hebel aufweist.

Karabinerhaken dieser Art sind bekannt. Sie werden sowohl im Sportbereich wie auch in der Industrie angewendet. Bei einfachen Ausführungsformen solcher Karabinerhaken ist der Schließteil in seiner Schließstellung nur durch die Kraft der auf ihn einwirkenden Feder gehalten. Es sind aber auch Ausführungsformen solcher Karabinerhaken bekannt geworden, bei welchen der Schließteil in seiner Schließstellung mechanisch gesichert ist, der Schließteil ist in seiner Schließstellung blockiert. Bei einer Ausführungsform dieser Art ist auf dem Schließteil ein Gewinde mit einer Gewindehülse angeordnet. Bei geschlossenem Karabinerhaken wird die Gewindehülse so lange verdreht, bis sie die aneinander anliegenden Endabschnitte von Schließteil und Hakenteil formschlüssig übergreift. Eine andere Ausführungsform dieser Art besitzt am freien Ende des Schließteiles eine verdrehbare Büchse mit einem Ausschnitt, der durch die Verdrehung der Büchse in bzw. aus der Schwenkebene des Schließteiles bringbar ist, so daß dadurch die aneinanderliegenden Abschnitte oder Enden von Schließteil und Hakenteil entweder von dieser Büchse übergriffen sind oder über den erwähnten Ausschnitt frei gegeneinander bewegt werden können. Eine weitere Ausführungsform trägt auf dem Schließteil eine federbelastete Büchse, die die scharnierartige Verbindung zwischen Hakenteil und Schließteil formschlüssig übergreift und damit die Verschwenkbarkeit des Schließteiles blockiert. Durch axiale Verschiebung dieser Büchse entlang des bolzenartigen Schließteiles wird die scharnierartige Verbindung freigegeben, so daß der Schließteil verschwenkt werden kann. Bei Freigabe dieser federbelasteten Büchse wird diese durch die auf sie einwirkende Kraft der Feder wieder in diese Blockierstellung zurückgeschoben. Bei all diesen Ausführungsformen eines Karabinerhakens müssen zur Betätigung der erwähnten Verriegelungsglieder beide Hände verwendet werden, was als nachteilig empfunden wird, abgesehen davon, daß die Betätigung dieset Verriegelungsglieder eine bewußte Handlung des Benutzers voraussetzen. Es ist ohne weiteres erkennbar, daß dies nachteilig ist, vor allem dann, wenn solche Karabinerhaken in extremen Situationen eingesetzt werden, wie dies beispielsweise beim Alpinsport (Klettersport) der Fall ist.

Diesen Nachteilen begegnet der ebenfalls bekanntgewordene Karabinerhaken nach der EP-A 466 613 dadurch, daß der Schließteil so ausgebildet ist, daß das eine vom Karabinerhaken aufzunehmende Kraftübertragungsglied direkt am Schließteil befestigt ist. Wird das Kraftübertragungsglied belastet, so zieht es selbsttätig den Schließteil in seine Schließstellung, ohne daß
es eines manuellen und/oder bewußten Eingriffes durch den Benutzer bedarf. Ein Karabinerhaken dieser letzterwähnten Bauart ist jedoch für den praktischen Einsatz nicht verwendbar, weil die gesamte Belastung, die vom Karabinerhaken aufzunehmen ist, hier über die Schwenkachse des Schließteiles übertragen werden muß. Die Schwenkachse des Schließteiles müßte hier so stark dimensioniert sein wie der Hakenteil selbst, eine Forderung, die konstruktiv bislang nicht lösbar ist.

Auch die EP-A 362 087 ist hier zu erwähnen, aus der ein Karabinerhaken bekannt ist, der eine Einrichtung aufweist, um den in Offenstellung geschwenkten Schließteil in dieser Lage zu arretieren. Zu diesem Zweck weist der am fi-eien Ende des Hakenteiles benachbarte Abschnitt an seiner Innenseite einen um eine rechtwinkelig zur Ebene des Hakenteiles stehende Achse schwenkbaren, dem Verlauf dieses Abschnittes im wesentlichen folgenden Hebel auf. Die Schwenkachse dieses Hebels liegt nahe dem freien Ende des Hakenteiles. In seinem unbelasteten Zustand schließt dieser einarmige Hebel mit dem erwähnten Abschnitt einen spitzen Winkel ein und ragt mit seinem freien Ende in die Bewegungsbahn des freien Endes des Schließteiles und hält somit den Schließteil in seiner Offenstellung fest. Wird ein Seil in diesen Haken eingezogen, so drückt das Seil diesen einarmigen Hebel nach unten und gibt den in seiner Offenstellung befindlichen Schließteil frei, der nun in seine Schließstellung schwenkt, ohne jedoch in dieser Schließstellung in irgendeiner Form arretiert zu werden.

Ausgehend von diesem Stand der Technik zielt die Erfindung darauf ab, einen Karabinerhaken so auszugestalten, daß der Schließteil in seiner Schließstellung bei belastetem Karabinerhaken selbsttätig verriegelt ist, ohne daß es eines besonderen Eingriffes in die konstruktive Gestaltung des Karabinerhakens bedarf, und ohne vor allem die Belastungsfähigkeit des Karabinerhakens zu beeinträchtigen. Diese Aufgabe wird erfindungsgemäß dadurch gelöst, daß der Hebel zweiarmig ausgebildet ist, dessen dem freien Ende des Hakenteiles benachbarter Arm bei unbelastetem Karabinerhaken durch Federkraft am Hakenteil anliegt und dessen stirnseitiges Ende bis nahe zu dem in Schließstellung befindlichen Ende des Schließteiles reicht und der andere Arm des Hebels von dem ihm benachbart liegenden Abschnitt des Hakenteiles distanziert ist und bei gegen die Federkraft verschwenktem Hebel das stirnseitige Ende des dem freien Ende des Hakenteiles benachbarten Armes in den Schwenkbereich des freien Endes des in Schließstellung befindlichen Schließteiles ragt bzw. an diesem anliegt. Eine Ausgestaltung der Erfindung liegt darin, daß bei unbelastetem Karabinerhaken der Schließteil in seiner Offenstellung selbsttätig gehalten wird, bis die Belastung auf den Karabinerhaken einwirkt. Erst dann soll der Schließteil sich in die Schließstellung bewegen und darüber hinaus in dieser Schließstellung selbsttätig gehalten sein. Dazu ist vorgesehen, daß das stirnseitige Ende des bogenförmigen Armes des zweiarmigen Hebels in den Schwenkbereich des Schließteiles ragt, wobei die vom schwenkbaren Schließteil bzw. dessen freiem Ende bei dessen Verschwenkung überstrichene Hüllkurve das freie Ende des bogenförmigen Armes des zweiarmigen Hebels bei unbelastetem Karabinerhaken überschneide

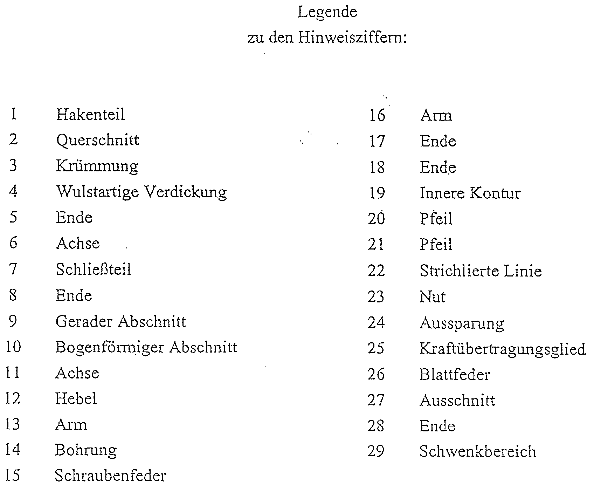

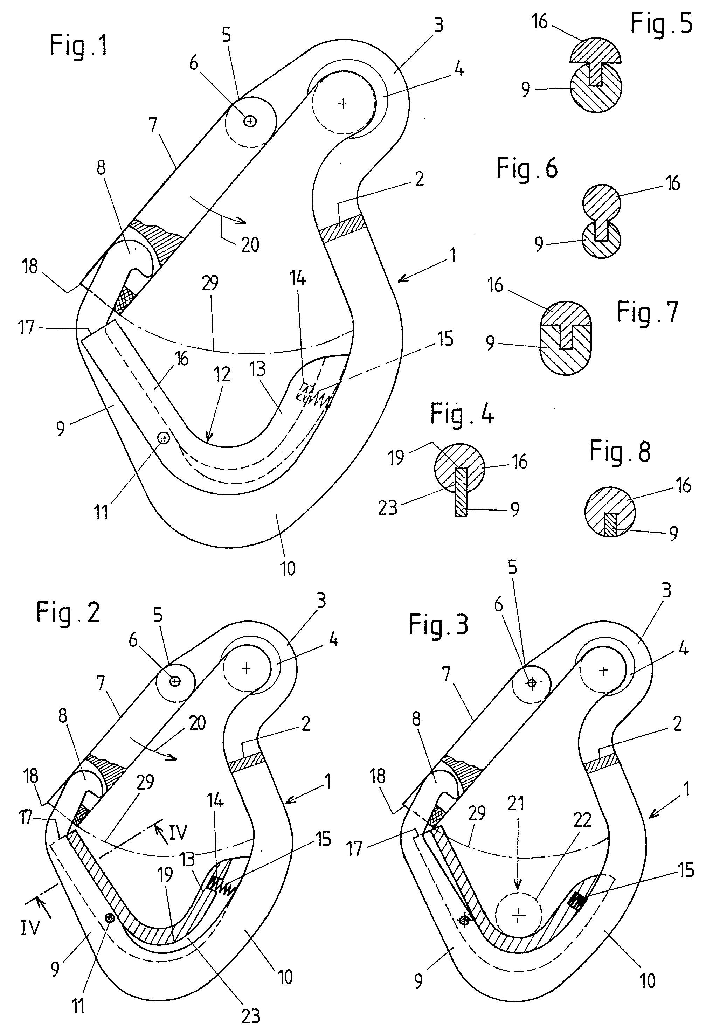

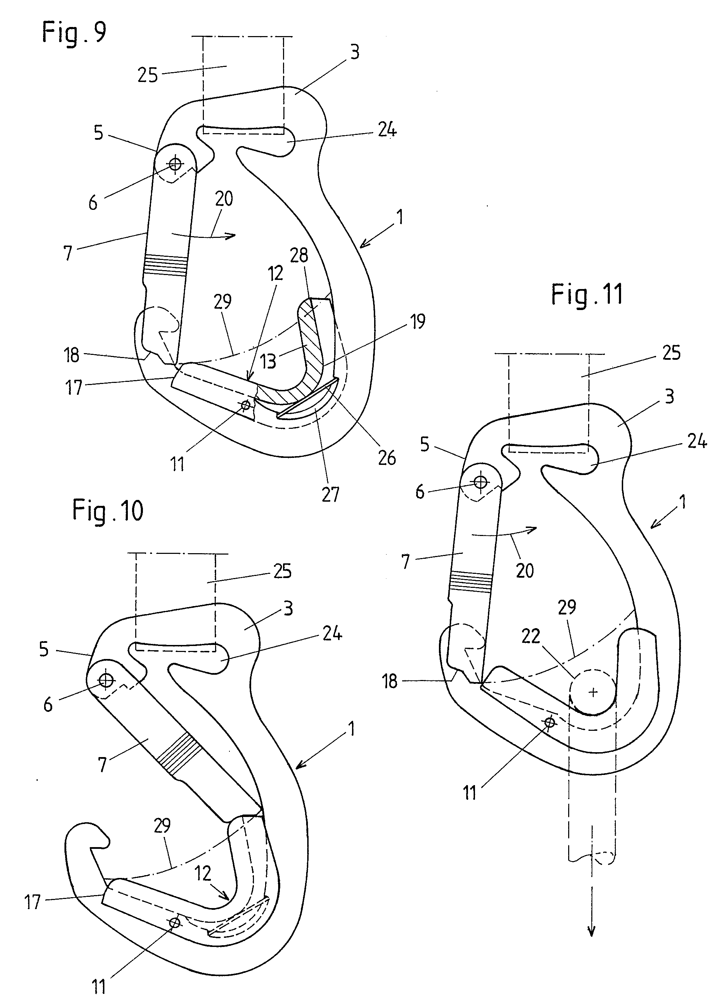

Anhand der Zeichnung werden Ausführungsbeispiele der Erfindung näher erläutert, ohne dadurch die Erfindung auf diese gezeigten Ausführungsbeispiele einzuschränken. Es zeigen: Fig. 1 in Ansicht eine erste Ausführungsform eines Karabinerhakens, die Fig. 2 und 3 Detailschnitte durch den zweiarmigen Hebel beim Ausführungsbeispiel nach Fig. 1, wobei verschiedene Stellungen dieses Hebels veranschaulicht sind; Fig. 4 einen Querschnitt nach der Linie IV - IV in Fig. 1; die Fig. 5 bis 8 sind Querschnitte, ähnlich jenem nach Fig. 4, die ver- schiedene Querschnittsformen von Hebel und Hakenteil veranschaulichen; die Fig. 9, 10 und 11 einen Karabinerhaken in einer zweiten Ausführungsform, wobei hier verschiedene Stellungen der beweglichen Teile veranschaulicht sind.

Der Karabinerhaken nach dem ersten Ausführungsbeispiel besteht aus einem im wesentlichen C-förmigen Hakenteil 1, der aus einem Flachmaterial gefertigt sein kann, wie der eingezeichnete Querschnitt 2 veranschaulicht. Die Innenseite der oberen Krümmung 3, die der Aufnahme eines seilartigen Kraftübertragungsgliedes dient, besitzt eine wulstartige Verdickung 4. Am oberen freien Ende 5 des Hakenteiles 1 ist um eine rechtwinkelig zur Ebene des Hakenteiles 1 stehende Achse 6 ein bolzenartiger Schließteil 7 schwenkbar gelagert (Pfeil 20). In der Schließstellung des Karabinerhakens übergreift dieser Schließteil 7 mit seinem schwenkbaren Ende das freie Ende 8 des Hakenteiles 1 und liegt an diesem von innen her an.

Ausgehend von der in Fig. 1 gezeichneten Stellung ist der Schließteil 7 nur im Gegenuhrzeigersinn bewegbar. In der hier gezeigten Schließstellung ist der Schließteil durch eine hier nicht veranschaulichte Feder gehalten, die mit dem oberen Ende 5 des Hakenteiles 1 kraftschlüssig in herkömmlicher Weise zusammenwirkt.

Der dem unteren freien Ende 8 des Hakenteiles 1 benachbarte Abschnitt 9 verläuft im wesentlichen gerade, an ihn schließt ein bogenförmiger Abschnitt 10 an, der der Anlage und Aufnahme des zweiten seilartigen Kraftübertragungsgliedes dient. Auf der Innenseite und im Bereich der beiden letzterwähnten Abschnitte 9 und 10 des Hakenteiles 1 ist um eine rechtwinkelig zur Ebene des Hakenteiles 1 stehende Achse 11 ein zweiarmiger Hebel 12 schwenkbar gelagert, dessen Längsverlauf im wesentlichen den beiden ihm benachbart liegenden Abschnitte 9 und 10 entspricht. Auf der Innenseite des bogenförmig verlaufenden Armes 13 dieses zweiarmigen Hebels 12 ist eine Bohrung 14 ausgespart, die eine Schraubenfeder 15 aufnimmt, die mit ihrem anderen Ende an der Innenseite des Abschnittes 10 anliegt (Fig. 2), und die bei unbelasteten Karabinerhaken den gerade verlaufenden Arm 16 des Hebels 12 an den ihm benachbart liegenden Abschnitt 9 andrückt. Das stirnseitige Ende 17 dieses geraden Armes 16 liegt nahe dem stirnseitigen Ende 18 des Schließteiles 7, wenn sich dieser in Schließstellung (Fig. 1) befindet. Die Fig. 2 entspricht der Fig. 1, jedoch ist hier der Hebel 12 aufgeschnitten, um den Verlauf der inneren Kontur 19 des zweiarmigen Hebels 12 zu veranschaulichen. Diese Kontur 19 ist identisch mit dem Grund der Nut 23, die auf der Außenseite dieses Hebels eingearbeitet ist, der hier aus einem Rundprofilstück gefertigt ist.

Wird nun in den Karabinerhaken unter Verschwenkung (Pfeil 20 - Fig. 1) des Schließteiles 7 ein zweites seilartiges Kraftübertragungsglied (dargestellt in Fig. 3 durch die strichlierte Linie 22) eingebracht und in der Folge belastet (Pfeil 21), so wirkt dieses Kraftübertragungsglied auf den gebogen verlaufenden Arm 13 des Hebels 12 ein und verschwenkt diesen gegen die Kraft der Feder 15 im Uhrzeigersinn, bis der Hebel 12 mit seiner inneren Kontur 19 am gebogenen Abschnitt 10 des Hakenteiles 1 anliegt (Fig. 3). Dadurch wird das stirnseitige Ende 17 des geraden Armes 16 des Hebels 12 angehoben und gelangt dadurch unmittelbar in den Schwenkbereich 29 des freien Endes 18 des bolzenartigen Schließteiles 7, wodurch dessen Schwenkbarkeit blockiert ist. Damit ist der Schließteil 7 in seiner Schließstellung durch die Belastung des Karabinerhakens selbsttätig gesichert. Der Hebel 12 ist aus einem Rundprofilstück gebogen und an der Außenseite des gebogen verlaufenden Hebels 12 ist eine Nut 23 ausgespart zur Aufnahme des im Querschnitt rechteckigen Hakenteiles 1 (Fig. 4).

Die erwähnte Querschnittsgestaltung von Hebel 12 und Hakenteil 1 ist für die Erfindung nicht wesentlich. Andere mögliche Ausgestaltungen zeigen die Querschnittsdarstellungen nach den Fig. 5 bis 8, die der Querschnittsdarstellung nach Fig. 4 im Prinzip entsprechen.

Das zweite Ausführungsbeispiel (Fig. 9 - 11) entspricht im wesentlichen dem erstbesprochenen Ausführungsbeispiel, wobei zur Bezeichnung gleichwertiger Teile dieselben Hinweisziffern eingesetzt worden sind. In der oberen Krümmung 3 des Hakenteiles 1 ist hier eine nach innen offene T-förmige Aussparung 24 vorgesehen zur Aufnahme eines bandartigen Kraftübertragungsgliedes 25, das hier nur angedeutet ist. Das stirnseitige Ende 18 des bolzenförmigen Schließteiles ist abgestuft ausgebildet. Als Feder ist hier eine Blattfeder 26 vorgesehen, die in einem nutenartigen Ausschnitt 27 an der Innenseite des gebogenen Abschnittes 10 des Hakenteiles 1 liegt. Gegen diese Blattfeder 26 stützt sich die innere Kontur 19 des bogenförmigen Armes 13 des Hebels 12 ab. Dieser Arm 13 ist nun so lange ausgeführt, daß er bei unbelastetem Karabinerhaken mit seinem stirnseitigen Ende 28 in den Schwenkbereich 29 des Schließteiles 7 ragt. Das freie Ende 28 des bogenförmigen Armes 13 des zweiarmigen Hebels 12 ist gegen den Schließteil hin keilförmig abgeschrägt. Wird nun bei unbelastetem Karabinerhaken der Schließteil in seine Offenstellung (Fig. 10) geschwenkt, so stößt er mit seinem abgestuften, stirnseitigen Ende 18 an die keilförmige Abschrägung des Endes 28 des Hebels 12 an, der dadurch gegen die Kraft der Blattfeder 26 etwas verschwenkt wird und anschließend in seine Ursprungsstellung sich zurückbewegt, wodurch nun der Schließteil 7 formschlüssig in seiner Offenstellung gehalten ist (Fig. 10).

Wird nun in den offenen Karabinerhaken ein seilartiges Kraftübertragungsglied eingeführt und anschließend belastet, so wandert dieses unverzüglich in den gebogenen Abschnitt des Hebels 12, wodurch dieser im Uhrzeigersinn gegen die Kraft der Feder 26 verschwenkt wird. Dadurch wird der in Offenstellung befindliche Schließteil 7 frei, der unter der Wirkung der in seinem Inneren angeordneten, hier nicht dargestellten Feder in seine ursprüngliche Lage zurückschwenkt und dabei das freie Ende 17 des Hebels 12 überfährt, bevor er in seine eigene Schließstellung gelangt, in der er nun durch den infolge der Belastung des Karabinerhakens verschwenkten Hebels 12 verriegelt ist (Fig. 11).

Sowohl das Verriegeln des Schließteiles 7 unter Belastung des Karabinerhakens wie auch die Offenhaltung desselben bei unbelastetem Karabinerhaken erfolgt selbsttätig und erfordern keine manuellen und bewußten Eingriffe durch den Benutzer. Darüber hinaus wird die Belastung unmittelbar durch den Hakenteil aufgenommen, ohne daß irgendeine der hier eingesetzten Schwenkachsen belastet werden muß.

## Patentansprüche

1. Karabinerhaken mit einem im wesentlichen C-förmigen, lastaufnehmenden Hakenteil (1) und einem am einen Ende des Hakenteiles in dessen Ebene schwenkbar gelagerten, durch Federkraft in Schließstellung gehaltenen Schließteil (7), der in der Schließstellung am anderen freien Ende des Hakenteiles (1) an dessen Innenseite anliegt und der dem freien Ende (8) des Hakenteiles (1) benachbarte Abschnitt (9, 10) an seiner Innenseite einen um eine rechtwinkelig zur Ebene des Hakenteiles (1) stehende Achse (11) schwenkbaren, dem Verlauf dieses Abschnittes (9, 10) im wesentlichen folgenden Hebel (12) aufweist, dadurch gekennzeichnet, daß der Hebel (12) zweiarmig ausgebildet ist, dessen dem freien Ende (8) des Hakenteiles (1) benachbarter Arm (16) bei unbelastetem Karabinerhaken durch Federkraft am Hakenteil (1) anliegt und dessen stirnseitiges Ende (17) bis nahe zu dem in Schließstellung befindlichen Ende (18) des Schließteiles (7) reicht und der andere Arm (13) des Hebels (12) von dem ihm benachbart liegenden Abschnitt (10) des Hakenteiles (1) distanziert ist und bei gegen die Federkraft verschwenktem Hebel (12) das stirnseitige Ende (17) des dem freien Ende (8) des Hakenteiles benachbarten Armes (16) in den Schwenkbereich des freien Endes (18) des in Schließstellung befindlichen Schließteiles (7) ragt bzw. an diesem anliegt.

2. Karabinerhaken nach Anspruch 1, dadurch gekennzeichnet, daß der von seinem benachbarten Abschnitt (10) bei unbelastetem Karabinerhaken distanziert liegende Arm (13) des zweiarmigen Hebels (12) korrespondierend zu diesem Abschnitt (10) bogenförmig verläuft.

3. Karabinerhaken nach Anspruch 1, dadurch gekennzeichnet, daß der dem freien Ende (8) des Hakenteiles (1) benachbarte Arm (16) des Hebels (12) im wesentlichen gerade verläuft.

4. Karabinerhaken nach einem der Ansprüche 1 bis 3, dadurch gekennzeichnet, daß das stirnseitige Ende (28) des bogenförmigen Armes (13) des zweiarmigen Hebels (12) in den Schwenkbereich (29) des Schließteiles (7) ragt, wobei die vom schwenkbaren Schließteil (7) bzw. dessen freiem Ende (18) bei dessen Verschwenkung überstrichene Hüllkurve das freie Ende (28) des bogenförmigen Armes (13) des zweiarmigen Hebels (12) bei unbelastetem Karabinerhaken überschneidet (Fig. 10).

5. Karabinerhaken nach Anspruch 4, dadurch gekennzeichnet, daß die Stirnseite des freien Endes (18) des Schließteiles (7) abgestuft ist und die Stirnseite des freien Endes (28) des bogenförmigen Armes 13) dazu korrespondierend ausgebildet ist und der in Offenstellung geschwenkte Schließteil (7) durch formschlüssige Paarung dieser Enden in dieser Offenstellung gehalten ist (Fig. 10).

6. Karabinerhaken nach Anspruch 5, dadurch gekennzeichnet, daß das freie Ende (28) des bogenförmigen Armes (13) des zweiarmigen Hebels (12) gegen den Schließteil (7) hin keilförmig abgeschrägt ist.

7. Karabinerhaken nach Anspruch 1, dadurch gekennzeichnet, daß an der dem Hakenteil (1) zugewandten Seite des bogenförmigen Armes (13) des zweiarmigen Hebels (12) eine Bohrung (14) vorgesehen ist zur Aufnahme einer Schraubenfeder (15), die mit ihrem einen Ende am Hakenteil (1) anliegt (Fig. 2).

8. Karabinerhaken nach Anspruch 1, dadurch gekennzeichnet, daß der Hebel (12) aus einem Rundprofilstück gebogen ist und an der Außenseite des gebogen verlaufenden Hebels (12) eine Nut (23) ausgespart ist zur Aufnahme des im Querschnitt rechteckigen Hakenteiles (1).

## Claims

1. A spring hook with a substantially C-shaped load-bearing hook part (1) and a closing part (7) which is pivotably mounted at one end of the hook part in the plane thereof and is retained in closed position by spring force, and when in closed position the said closing part (7) rests against the inner surface of the other free end of the hook part (1), and the portion (9, 10) adjacent to the free end (8) of the hook part (1) has on its inner surface a lever (12) which is pivotable about an axis (11) at right angles to the plane of the hook part (1) and substantially follows the course of the said portion (9, 10), **characterised in that** the lever (12) is formed with two arms, and the arm (16) thereof adjacent to the free end (8) of the hook part (1) rests against the hook part (1) by means of spring force when the spring hook is unloaded, and the end surface (17) of the said arm reaches to the vicinity of the end (18) of the closing part (7) located in closed position, and the other arm (13) of the lever (12) is distanced from the adjacent portion (10) of the hook part (1) and when the lever (12) is pivoted against the spring force, the end surface (17) of the arm (16) adjacent to the free end (8) of the hook part projects into or adjoins the pivoting region of the free end (18) of the closing part (7) located in closed position.

2. A spring hook according to claim 1, **characterised in that** when the hook is unloaded, that arm (13) of the two-armed lever (12) which is distanced from its adjacent portion (10) extends in a curve so as to correspond to the said portion (10).

3. A spring hook according to claim 1, **characterised in that** the arm (16) of the lever (12) adjacent to the free end (8) of the hook part (1) extends substantially in a straight line.

4. A spring hook according to one of claims 1 to 3, **characterised in** **that** the end surface (28) of the curved arm (13) of the two-armed lever (12) projects into the pivoting region (29) of the closing part (7), and the envelope curve, covered by the pivotable closing part (7) or the free end (18) thereof during pivoting, intersects the free end (28) of the curved arm (13) of the two-armed lever (12) when the spring hook is unloaded (fig. 10).

5. A spring hook according to claim 4, **characterised in that** the end surface of the free end (18) of the closing part (7) is stepped, and the end surface of the free end (28) of the curved arm (13) is formed to correspond thereto, and the closing part (7) pivoted into open position is retained in the said open position by positively-locking pairing of the said ends (fig. 10).

6. A spring hook according to claim 5, **characterised in that** the free end (28) of the curved arm (13) of the two-armed lever (12) is sloped so as to be wedge-shaped in the direction of the closing part (7).

7. A spring hook according to claim 1, **characterised in that** a bore (14) is provided on that side of the curved arm (13) of the two-armed lever (12) which faces the hook part (1), the bore being intended to receive a helical spring (15), one end of which rests against the hook part (1) (fig. 2).

8. A spring hook according to claim 1, **characterised in that** the lever (12) is curved from a round-profiled part, and a groove (23) is provided on the outer surface of the lever (12) which extends in a curve, the groove being intended to receive the hook part (1) which is of rectangular cross-section.

## Revendications

1. Crochet à mousqueton ayant une partie formant crochet (1), essentiellement en forme de C, pour recevoir la charge, et un organe de fermeture (7), prévu à une extrémité de la partie en forme de crochet, monté pivotant dans son plan et maintenu en position de fermeture par la force d'un ressort, cet organe de fermeture s'appuyant contre la face intérieure de l'autre extrémité libre de la partie en forme de crochet (1), en position de fermeture, et le segment (9, 10) voisin de l'extrémité libre (8) de la partie formant crochet (1), comporte sur son côté intérieur un levier (12) pivotant autour d'un axe (11) perpendiculaire au plan de la partie formant crochet (1), et qui suit essentiellement le tracé de ce segment (9, 10), caractérisé en ce que le levier (12) est formé de deux bras dont le bras (16) voisin de l'extrémité libre (8) de la partie formant crochet (1), est appliqué, par la force d'un ressort contre la partie formant crochet (1) lorsque le crochet à mousqueton n'est pas chargé et dont l'extrémité frontale (17) arrive jusqu'à proximité tandis que l'extrémité (18) de la partie de fermeture (7) qui se trouve en position de fermeture, et dont l'autre bras (13) du levier (12) est écarté du segment (10) de la partie formant crochet (1), qui se trouve à son voisinage et, lorsque le levier (12) est basculé contre la force du ressort, l'extrémité frontale (17) du bras (16) voisin de l'extrémité libre (8) de la partie formant crochet, vient dans la zone de basculement de l'extrémité libre (18) de la pièce de fermeture (7) qui se trouve en position de fermeture ou vient s'appliquer contre cette extrémité.

2. Crochet à mousqueton selon la revendication 1, caractérisé en ce que le bras (13) du levier à deux bras (12), qui est éloigné de son segment voisin (10) lorsque le crochet à mousqueton n'est pas chargé, a une forme courbe correspondant à celle du segment (10).

3. Crochet à mousqueton selon la revendication 1, caractérisé en ce que le bras (16) du levier (12) voisin de l'extrémité libre (8) de la partie formant crochet (1), est essentiellement droit.

4. Crochet à mousqueton selon l'une des revendications 1 à 3, caractérisé en ce que l'extrémité frontale (28) du bras (13) de forme courbe du levier à deux bras (12), vient dans la zone de pivotement (29) de la pièce de fermeture (7), et la courbe enveloppe décrite par la pièce de fermeture (7) pivotante ou par son extrémité libre (18), pendant son basculement, coupe l'extrémité libre (28) du bras de forme courbe (13) du levier à deux bras (12) lorsque le crochet à mousqueton n'est pas chargé (figure 10).

5. Crochet à mousqueton selon la revendication 4, caractérisé en ce que la face frontale de l'extrémité libre (18) de la pièce de fermeture (7) est à gradin et la face frontale de l'extrémité libre (28) du bras (13) de forme courbe a une forme correspondante, tandis que la pièce de fermeture (7) basculée en position d'ouverture est maintenue par un appariement par la forme, entre les extrémités, dans cette position d'ouverture (figure 10).

6. Crochet à mousqueton selon la revendication 5, caractérisé en ce que l'extrémité libre (28) du bras de forme courbe (13) du levier à deux bras (12) est coupée en forme de coin en direction de la pièce de fermeture (7).

7. Crochet à mousqueton selon la revendication 1, caractérisé en ce que le côté du bras courbe (13) du levier à deux bras (12), tourné vers la pièce formant crochet (1), comporte un perçage (14) pour recevoir un ressort hélicoïdal (15) s'appuyant par une extrémité contre la partie formant crochet (1) (figure 2).

8. Crochet à mousqueton selon la revendication 1, caractérisé en ce que le levier (12) est cintré en partant d'une pièce profilée ronde, et en ce que la face extérieure du levier (12) courbe comporte une rainure (23) pour recevoir la pièce en forme de crochet (1) à section rectangulaire.
